# EUROPEAN PATENT APPLICATION

(11) **EP 4 734 247 A1**
(43) Date of publication of application: **29.04.2026**
(21) Application number: 23944694.1
(22) Date of filing: 12.07.2023
(51) Int. Cl.: H01M 50/184, H01M 50/188, H01M 50/593, H01M 50/15, H01M 50/55, H01M 50/30, H01M 50/103

(54) **LOWER PLASTIC, END COVER ASSEMBLY, ENERGY STORAGE DEVICE AND ENERGY STORAGE SYSTEM**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: LI, Maosong, Xiamen, Fujian 361100 (CN); TAN, Jiben, Xiamen, Fujian 361100 (CN)
(74) Representative: Santarelli
(86) International application number: PCT/CN2023/107074
(87) International publication number: WO 2025/010674

(57) **Abstract**

A lower plastic member, an end-cover assembly, an energy storage apparatus, and an energy storage system are provided. The lower plastic member (100) includes a body portion (110) and a vent portion (120). The vent portion (120) includes a vent plate (121), a first connecting rib (122), a second connecting rib (123), and a connecting edge-plate (124). The vent plate (121) has a third surface (121a) and a fourth surface (121b). The first connecting rib (122) and the second connecting rib (123) are connected to the third surface (121a). A first push-point (121d) is provided on the fourth surface (121b) at a position of the fourth surface (121b) that is positioned facing away from a connection between the third surface (121a) and the first connecting rib (122). A second push-point (121e) is provided on the fourth surface (121b) at a position of the fourth surface (121b) that is positioned facing away from a connection between the third surface (121a) and the second connecting rib (123).

## Description

### TECHNICAL FIELD

This disclosure relates to the field of energy storage technology, and in particular, to a lower plastic member, an end-cover assembly, an energy storage apparatus, and an energy storage system.

### BACKGROUND

The thickness of an end-cover assembly of a battery is an important parameter affecting energy density per unit volume of the battery. If the end-cover assembly is too thick, the energy density per unit volume of the battery may be reduced. At present, the end-cover assembly includes a lower plastic member for insulation between a top cover and a terminal post. To increase the energy density per unit volume of the battery, the lower plastic member is usually designed to be very thin.

When the lower plastic member is injection-molded, the lower plastic member usually needs to be completely cooled before demolding, resulting in low production efficiency. To improve the production efficiency, when the lower plastic member that has not been completely cooled is demolded, a vent plate of the lower plastic member is prone to phenomena such as warping, deformation, and draft mark, resulting in a low yield rate.

### SUMMARY

The technical problem to be solved by the present disclosure is to provide a lower plastic member, an end-cover assembly, an energy storage apparatus, and an energy storage system that are less prone to phenomena such as warping, deformation, and draft mark during demolding.

In a first aspect, the present disclosure provides a lower plastic member. The lower plastic member includes a body portion and a vent portion. The body portion has a first surface and a second surface that are opposite to each other in a first direction. The vent portion includes a vent plate, a first connecting rib, a second connecting rib, and a connecting edge-plate. The connecting edge-plate is spaced apart from the body portion in a second direction. The vent plate is positioned between the body portion and the connecting edge-plate in the second direction. The vent plate has a third surface and a fourth surface that are opposite to each other in the first direction. The fourth surface is positioned at one side of the second surface positioned facing away from the first surface in the first direction. The vent plate defines a vent hole extending through the third surface and the fourth surface. The first connecting rib is positioned facing towards the second connecting rib in a third direction. The first connecting rib has two ends respectively connected to the body portion and the vent portion. The second connecting rib has two ends respectively connected to the body portion and the vent portion. The first connecting rib and the second connecting rib are connected to the third surface in the first direction. Positions where the first connecting rib and the second connecting rib are connected to the third surface do not overlap the vent hole. A first push-point is provided on the fourth surface at a position of the fourth surface that is positioned facing away from a connection between the third surface and the first connecting rib. A second push-point is provided on the fourth surface at a position of the fourth surface that is positioned facing away from a connection between the third surface and the second connecting rib.

The vent portion is configured to correspond to an explosion-proof valve and can provide a gas-collecting space for the explosion-proof valve when the explosion-proof valve is opened. The vent portion can make the gas flow and collect below the explosion-proof valve. The fourth surface is positioned at one side of the second surface facing away from the first surface in the first direction, so that if the thickness of the vent plate is controlled to be constant, the vent portion may have a larger space for the explosion-proof valve to collect gas. Since the fourth surface is positioned at the side of the second surface facing away from the first surface in the first direction, phenomena such as draft mark and deformation are more likely to occur when the vent plate is demolded. The fourth surface is provided with the first push-point and the second push-point, so that when the lower plastic member is demolded, the first push-point and the second push-point are configured for contact with ejector pins of the mold respectively. When the ejector pins of the mold move, the ejector pins can eject the lower plastic member to demold the lower plastic member. The first push-point is disposed at a position of the fourth surface that is positioned facing away from the connection between the third surface and the first connecting rib. When the ejector pin is in contact with the first push-point and pushes the lower plastic member to demold, the first connecting rib can improve the structural strength of the first push-point. When the first push-point is subjected to the thrust of the ejector pin, the first connecting rib can reduce the recessed degree of the first push-point, reduce the probability of draft mark, and improve the yield of the lower plastic member. The second push-point is disposed at a position of the fourth surface that is positioned facing away from the connection between the third surface and the second connecting rib. When the ejector pin is in contact with the second push-point and pushes the lower plastic member to demold, the second connecting rib can improve the structural strength of the second push-point. When the second push-point is subjected to the thrust of the ejector pin, the second connecting rib can reduce the recessed degree of the second push-point, reduce the probability of draft mark, and improve the yield of the lower plastic member. No through hole is defined in the region where the first connecting rib and the second connecting rib are connected to the vent plate, so that the connection structural strength between the vent plate and each of the first connecting rib and the second connecting rib can be improved, thereby further improving the overall structural strength of the lower plastic member.

In combination with the first aspect, in a possible implementation, a radius of the first push-point is greater than a diameter of the third push-point, and a radius of the second push-point is greater than a radius of the third push-point.

The first push-point, the second push-point, and the third push-point on the fourth surface respectively abut against the ejector pins of the mold. When the ejector pins of the mold move, the first push-point, the second push-point, and the third push-point are jointly stressed, so as to demold the vent plate and improve the demolding yield of the vent plate. The first push-point is disposed at the position of the fourth surface that is positioned facing away from the connection between the third surface and the first connecting rib. The second push-point is disposed at the position of the fourth surface that is positioned facing away from the connection between the third surface and the second connecting rib. The positions where the first connecting rib and the second connecting rib are connected to the third surface do not overlap the vent hole. It can be seen that there is a large space at the position of the fourth surface that is positioned facing away from the connection between the first connecting rib and the third surface to form the first push-point with a larger radius, and there is a large space at the position of the fourth surface that is positioned facing away from the connection between the second connecting rib and the third surface to form the second push-point with a larger radius. Compared with the third push-point, the radii of the first push-point and the second push-point are larger, so that the contact area between the ejector pin of the mold and each of the first push-point and the second push-point is larger, and the pressure between the ejector pin of the mold and each of the first push-point and the second push-point may be smaller. On the one hand, the probability of warping or deformation of the lower plastic member due to excessive local forces on the vent plate during demolding can be reduced. On the other hand, the lower plastic member can be demolded in advance, so that there is no need to wait for the lower plastic member to be completely cooled before performing the demolding, there improving the production efficiency of the lower plastic member.

In combination with the first aspect, in a possible implementation, the radius of the first push-point and the radius of the second push-point are both *r1.* The radius of the third push-point is *r2.* 1/3 ≤ *r2*/*r1 ≤* 2/3.

When the lower plastic member is demolded, the local forces on various parts of the vent plate may be different. By providing the first push-point and the second push-point with different radii from the third push-point, the probability of warping or deformation of the vent plate due to excessive concentration of local forces can be reduced. The positions of the first push-point, the second push-point, and the third push-point do not overlap the vent hole. The existence and arrangement of the vent holes may limit the radii of the first push-point, the second push-point, and the third push-point. If the value of *r2*/*r1* is too small, with *r2* being a fixed value, the arrangement position of the vent holes may be significantly affected, thereby impairing the gas circulation ability of the vent plate. If the value of *r2*/*r1* is too large, with *r2* being a fixed value, it is insufficient to balance the local forces on various parts of the vent plate when the lower plastic member is demolded.

In combination with the first aspect, in a possible implementation, the vent plate has a first end and a second end in the third direction. The multiple third push-points are divided into a first group, a second group, and a third group. The second group has at least two third push-points. A third push-point in the first group is distributed between the first end and the first push-point. The push-points in the second group are distributed between the first push-point and the second push-point. A third push-point in the third group is distributed between the second push-point and the second end. A distance between one third push-point in the first group adjacent to the first push-point and the first push-point is *d1.* A distance between two adjacent third push-points in the second group is *d2.* A distance between one third push-point in the third group adjacent to the second push-point and the second push-point is *d3. d2 < d1* and *d2 < d3.*

When the lower plastic member is demolded, the region between two ends of the vent plate is prone to be subjected to relatively large stress. By arranging the third push-points between the first push-point and the second push-point more densely, the forces on the vent plate can be more uniformly distributed when the lower plastic member is demolded, and the probability of draft mark and deformation of the vent plate can be reduced, thereby improving the product yield.

In combination with the first aspect, in a possible implementation, 1/4 *≤ d2*/*d1* ≤ 3/4 and 1/4 ≤ *d2*/*d3* ≤ 3/4.

Since 1/4 *≤ d2*/*d1* ≤ 3/4 and 1/4 *≤ d2*/*d3* ≤ 3/4, the forces on the vent plate can be more uniform when the lower plastic member is demolded. If the ratio of *d2*/*d1* is too small, both ends of the vent plate are prone to warping when the lower plastic member is demolded. If the ratio of *d2*/*d1* is too large, the effect of more uniform force on the vent plate cannot be achieved when the lower plastic member is demolded, and the vent plate is prone to the phenomenon of draft mark.

In combination with the first aspect, in a possible implementation, the first connecting rib, the second connecting rib, the body portion, the connecting edge-plate, and the vent plate cooperatively define a gas-collecting space configured for gas collection for the explosion-proof valve. A region of the first connecting rib between the two ends of the first connecting rib arches away from the second connecting rib. A region of the second connecting rib between the two ends of the second connecting rib arches away from the first connecting rib. The explosion-proof valve includes an explosion-proof sheet and an explosion-proof hole defined in a top cover. An outer periphery of the explosion-proof sheet is welded to an inner wall of the explosion-proof hole to form a weld-seam portion. A surface of the first connecting rib positioned facing away from the vent plate and a surface of the second connecting rib positioned facing away from the vent plate are configured to abut against the top cover. In the first direction, a projection of the weld-seam portion is configured to be positioned within the gas-collecting space.

On the one hand, the gas-collecting space can be configured for gas collection for the explosion-proof valve. On the other hand, the gas-collecting space can guide the gas, so that the gas in the energy storage apparatus can be discharged from the opened explosion-proof valve to the outside of the energy storage apparatus. Since the region of the first connecting rib between the two ends of the first connecting rib arches away from the second connecting rib, and the region of the second connecting rib between the two ends of the second connecting rib arches away from the first connecting rib, the gas-collecting space can be enlarged, thereby facilitating the discharge of more gas in the energy storage apparatus from the opened explosion-proof valve to the outside of the energy storage apparatus. The first connecting rib and the second connecting rib are arranged outside the explosion-proof sheet of the explosion-proof valve, so that the explosion-proof valve opened by mistake caused by the impact of a wound electrode assembly on the lower plastic member when the battery accidentally falls can be avoided, thereby improving the safety performance of the battery.

In combination with the first aspect, in a possible implementation, the vent plate is spaced apart from the body portion to define a first vent opening. The vent plate is spaced apart from the connecting edge-plate to define a second vent opening. Both the first vent opening and the second vent opening are in communication with the gas-collecting space.

The first vent opening and the second vent opening can facilitate the entry of gas in the energy storage apparatus into the gas-collecting space and then the discharge from the gas-collecting space to the outside of the energy storage apparatus. The first vent opening and the second vent opening are positioned at both sides of the vent plate in the second direction. The negative pressure generated by the gas entering the gas-collecting space through the first vent opening can balance the negative pressure generated by the gas entering the gas-collecting space through the second vent opening. Therefore, the force-bearing stability of the vent plate can be improved, thereby further improving the structural stability of the lower plastic member.

In combination with the first aspect, in a possible implementation, the vent portion further includes a first reinforcing rib and a second reinforcing rib. The first reinforcing rib has two ends respectively connected to the body portion and the connecting edge-plate. The first reinforcing rib is arcuately connected to the first end of the vent plate. The second reinforcing rib has two ends respectively connected to the body portion and the connecting edge-plate. The second reinforcing rib is arcuately connected to the second end of the vent plate. The first connecting rib and the second connecting rib are positioned between the first reinforcing rib and the second reinforcing rib.

The first reinforcing rib and the second reinforcing rib can enhance the connection strength between the vent plate and the body portion, and can also improve the structural strength of the vent portion, thereby further improving the overall strength of the lower plastic member. Therefore, the formation of sharp parts at the right-angled connections at both ends of the vent plate in the third direction can be avoided, thereby preventing the following. When the battery accidentally falls, the wound battery impacts the lower plastic member and the electrode sheet is scratched by the sharp parts of the lower plastic member, resulting in internal short circuit.

In combination with the first aspect, in a possible implementation, the body portion further has a mounting boss. The mounting boss has a fifth surface and a sixth surface that are opposite to each other in the first direction. The fifth surface exceeds the first surface. The sixth surface is positioned between the first surface and the second surface in the first direction. The mounting boss further defines a mounting through-hole extending through the fifth surface and the sixth surface.

The mounting boss is configured for mounting of the terminal post. The terminal post passes through the mounting through-hole. The fifth surface exceeds the first surface, and the sixth surface is positioned between the first surface and the second surface in the first direction, so that a step is formed between the first surface and the fifth surface. Due to the step, the terminal post may not directly act on the first surface, thereby reducing the possibility of deformation of the body portion when the terminal post is mounted in the mounting through-hole. A step formed between the second surface and the sixth surface can limit the position of the terminal post and improve the mounting stability of the terminal post.

In combination with the first aspect, in a possible implementation, the body portion has a first side-plate and a second side-plate opposite to each other in the third direction. The body portion further has a third side-plate connected to the first connecting rib and the second connecting rib. The first side-plate, the second side-plate, and the third side-plate all exceed the second surface.

The first side-plate, the second side-plate, and the third side-plate can enhance the overall strength of the sheet-like body portion in the second direction and the third direction. The third side-plate can improve the connection strength between the body plate and each of the first connecting rib and the second connecting rib.

In combination with the first aspect, in a possible implementation, a distance between the first surface and the second surface in the first direction is *h1.* A dimension of the third side-plate in the first direction is *h2.* 1/3 *≤ h1*/*h2 ≤* 2/3.

It can be seen that the dimension of the third side-plate in the first direction is greater than the dimension from the first surface to the second surface, so that the connection area between the body portion and each of the first connecting rib and the second connecting rib can be enlarged, thereby improving the connection strength between the third side-plate and each of the first connecting rib and the second connecting rib. If the value of *h1*/*h2* is too small, when the distance between the first surface and the second surface is constant, the dimension of the third side-plate in the first direction is too large, so that the dimension of the third side-plate in the first direction is too large, resulting in excessive space occupied by the lower plastic member. If the value of *h1*/*h2* is too large, when the distance between the first surface and the second surface is constant, the dimension of the third side-plate in the first direction is too small, so that the effect of improving the connection strength between the third side-plate and each of the first connecting rib and the second connecting rib is not significant.

In combination with the first aspect, in a possible implementation, the lower plastic member further includes a recessed platform. The recessed platform is connected to one end of the body portion positioned away from the vent portion. The recessed platform has a seventh surface and an eighth surface that are opposite to each other in the first direction. The eighth surface exceeds the second surface.

The recessed platform can improve the structural strength of the lower plastic member. The recessed platform, the first side-plate, the second side-plate, and the third side-plate cooperatively define a mounting space. The components of the end-cover assembly that are connected to the lower plastic member may be connected to the lower plastic member in the mounting space, so that the structural compactness of the end-cover assembly can be improved. The recessed platform, the first side-plate, the second side-plate, and the third side-plate can limit the components mounted in the mounting space.

In combination with the first aspect, in a possible implementation, the recessed-platform defines multiple grooves on the seventh surface in the third direction. Each of the multiple grooves defines a through hole on a bottom of each groove.

The grooves defined on the recessed platform can reduce the weight of the lower plastic member, reduce the material required for forming the recessed platform, and lower the cost. The multiple through holes can be used for gas circulation and can release the internal pressure of the energy storage apparatus.

In combination with the first aspect, in a possible implementation, multiple fourth push-points are provided on the second surface. The multiple fourth push-points are symmetrical about the symmetry plane.

The multiple fourth push-points are configured to abut against the ejector pins of the mold when the lower plastic member is demolded. When the ejector pins of the mold move, the ejector pins push the fourth push-points, so that the lower plastic member can be demolded, thereby reducing the possibility of draft mark and deformation of the body portion, and improving the production yield of the lower plastic member.

In combination with the first aspect, in a possible implementation, fifth push-points are provided on the eighth surface. The multiple fifth push-points are symmetrical about the symmetry plane.

The multiple fifth push-points are configured to abut against the ejector pins of the mold when the lower plastic member is demolded. When the ejector pins of the mold move, the ejector pins push the fifth push-points, so that the lower plastic member can be demolded, thereby reducing the possibility of draft mark and deformation of the recessed platform, and improving the production yield of the lower plastic member.

In combination with the first aspect, in a possible implementation, the lower plastic member is symmetrical about the symmetry plane.

Therefore, the overall uniformity of the lower plastic member can be improved, the overall structural strength of the lower plastic member can be enhanced, and the production yield of the lower plastic member can be increased. It can be seen that the first push-point and the second push-point are symmetrically arranged, the multiple third push-points are symmetrically arranged, the multiple fourth push-points are symmetrically arranged, and the multiple fifth push-points are symmetrically arranged, so that when the lower plastic member is demolded, the overall force acting on the lower plastic member can be more uniform, thereby reducing the possibility of draft mark and deformation of the lower plastic member.

In a second aspect, the present disclosure discloses an end-cover assembly. The end-cover assembly includes the lower plastic member in the first aspect, a top cover, and an explosion-proof valve. The top cover covers the lower plastic member. The explosion-proof valve is mounted on the top cover and positioned at a position corresponding to the vent portion.

In a third aspect, the present disclosure discloses an energy storage apparatus. The energy storage apparatus includes an electrode assembly, a connector, and the end-cover assembly in the second aspect. The connector is connected to the electrode assembly and the end-cover assembly.

In a fourth aspect, the present disclosure discloses an energy storage system. The energy storage system includes a conversion apparatus, a load, and the energy storage apparatus in the third aspect. The conversion apparatus is configured to convert energy to output electrical energy. The conversion apparatus is electrically connected to the energy storage apparatus. The energy storage apparatus is electrically connected to the load.

### BRIEF DESCRIPTION OF THE DRAWINGS

To more clearly illustrate the technical solutions in the embodiments of the present disclosure or in the background art, the following will describe the drawings required to be used in the embodiments of the present disclosure or in the background art.
FIG. 1 is a schematic structural view of an energy storage system provided in an embodiment of the present disclosure.
FIG. 2 is a schematic structural view of an energy storage apparatus provided in an embodiment of the present disclosure.
FIG. 3 is a schematic structural view of an end-cover assembly provided in an embodiment of the present disclosure.
FIG. 4 is an exploded schematic view of FIG. 3.
FIG. 5 is a schematic structural view of an end-cover assembly provided in an embodiment of the present disclosure, with a lower plastic member omitted.
FIG. 6 is a schematic perspective structural view of a lower plastic member provided in an embodiment of the present disclosure.
FIG. 7 is a schematic structural view of FIG. 6 from another angle.
FIG. 8 is a plan view of FIG. 7.
FIG. 9 is a cross-sectional view of FIG. 8 taken along A-A.

Description of reference signs of the accompanying drawings: 1000, energy storage apparatus; 1100, electrode assembly; 1200, end-cover assembly; 100, lower plastic member; 110, body portion; 111, first surface; 112, second surface; 112a, fourth push-point; 113, mounting boss; 113a, mounting through-hole; 113b, fifth surface; 113c, sixth surface; 114, first side-plate; 115, second side-plate; 116, third side-plate; 120, vent portion; 121, vent plate; 121a, third surface; 121b, fourth surface; 121c, vent hole; 121d, first push-point; 121e, second push-point; 121f, third push-point; 121g, first end; 121h, second end; 122, first connecting rib; 123, second connecting rib; 124, connecting edge-plate; 125, gas-collecting space; 126, first vent opening; 127, second vent opening; 128, first reinforcing rib; 129, second reinforcing rib; 130, recessed platform; 131, seventh surface; 132, eighth surface; 132a, fifth push-point; 133, groove; 133a, through hole; M, symmetry plane; 200, top cover; 300, explosion-proof valve; 310, explosion-proof sheet; 320, explosion-proof hole; 330, weld-seam portion; 400, terminal post; 2000, photovoltaic panel; 3000, wind turbine; 4000, power grid.

### DETAILED DESCRIPTION

To enable the purpose, technical solutions, and advantages of the present disclosure to be clearer, the following will further describe the present disclosure in detail with reference to the accompanying drawings.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electric energy at present is to develop green energy such as photovoltaic and wind power to replace fossil energy. At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage will cause loss of the power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an energy storage apparatus is provided in the present disclosure. The energy storage apparatus includes a group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including (wind and solar) power-generation-side energy storage, grid-side energy storage, base-station-side energy storage, user-side energy storage, etc. Corresponding types of energy storage apparatuses include the following:
(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.
(2) Small and medium-sized energy storage cabinets are used in industrial and commercial energy storage scenarios (banks, shopping malls, etc.) on the user side. The main operating mode is "peak shaving and valley filling". There is a large price difference in electricity bills at peak and valley according to electricity demand. After users have the energy storage device, in order to reduce costs, they usually charge the energy storage cabinets/boxes during the low electricity price period. During the peak electricity price period, the electricity in the energy storage device is discharged for use to achieve the purpose of saving electricity bills.

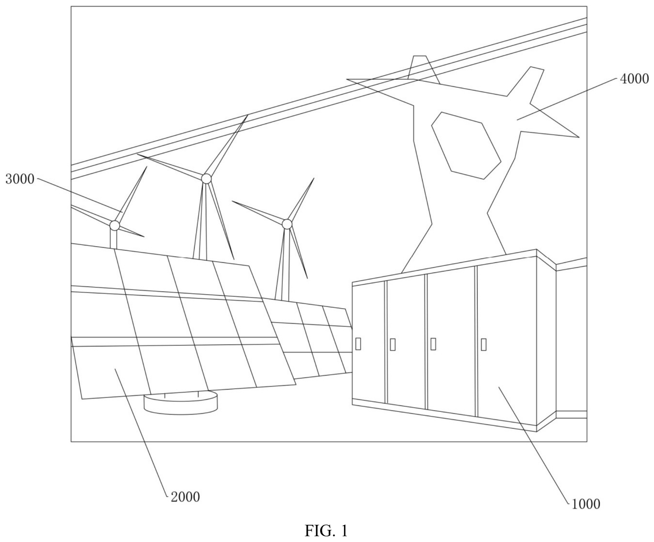

Reference can be made to FIG. 1. An embodiment of the present disclosure provides an energy storage apparatus applicable to an energy storage system. The energy storage system includes a photovoltaic energy conversion apparatus (photovoltaic panel 2000), a wind energy conversion apparatus (wind turbine 3000), a power grid 4000, and an energy storage apparatus 1000. The photovoltaic energy conversion apparatus and the wind energy conversion apparatus belong to or are energy conversion apparatuses. The energy storage apparatus 1000 is loaded in an energy storage cabinet and can be mounted outdoors. Specifically, the photovoltaic panel 2000 can convert solar energy into electrical energy during the low electricity price period. The energy storage apparatus 1000 is configured to store the electrical energy converted and supply the electrical energy to the power grid 4000 during peak electricity consumption, or supply power when the power grid 4000 is powered off/has a power outage. The wind energy conversion apparatus (wind turbine 3000) can convert wind energy into electrical energy. The energy storage apparatus 1000 is used to store the electrical energy converted and supply the electrical energy to the power grid 4000 during peak electricity consumption, or supply power when the power grid 4000 is powered off/has a power outage. The transmission of electrical energy can be carried out using high-voltage cables.

There may be several energy storage apparatuses 1000. The several energy storage apparatuses 1000 are connected in series or in parallel with each other. The several energy storage apparatuses 1000 are supported and electrically connected by isolation plates (not shown). In this embodiment, "several" refers to two or more. An energy storage box may also be provided outside the energy storage apparatus 1000, and the energy storage box is used to house the energy storage apparatus 1000.

It can be understood that the energy storage apparatus 1000 may include, but is not limited to, single batteries, battery modules, battery packs, battery systems, etc. The actual application forms of the energy storage apparatus provided in the embodiments of the present disclosure may be but are not limited to the listed products, and may also be other application forms. The embodiments of the present disclosure do not strictly limit the application form of the energy storage apparatus 1000. The embodiments of the present disclosure only take the energy storage apparatus 1000 as a multi-cell battery as an example for illustration.

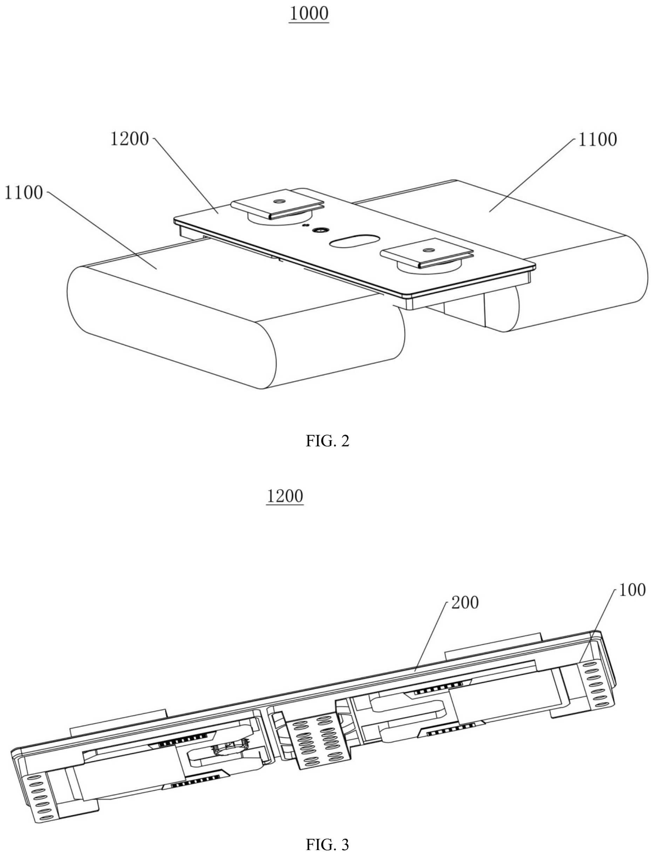

Reference can be made to FIG. 2. The energy storage apparatus 1000 includes an electrode assembly 1100, a connector, and an end-cover assembly 1200. The electrode assembly 1100 is connected to the end-cover assembly 1200 through the connector. Specifically, the connector is connected between the electrode assembly 1100 and the end-cover assembly 1200. The electrode assembly 1100 is configured to output electrical energy. The end-cover assembly 1200 is configured for electrical connection with a load or a conversion apparatus.

Reference can be made to FIG. 3 to FIG. 5. The present disclosure further discloses an end-cover assembly 1200. The end-cover assembly 1200 includes a lower plastic member 100, a top cover 200, and an explosion-proof valve 300. The cooperation between the lower plastic member 100 and the top cover 200 can position a terminal post 400. The terminal post 400 is also electrically connected to the electrode assembly 1100. The lower plastic member 100 has good insulation performance, and can reduce the possibility of the terminal post 400 leaking electricity. The explosion-proof valve 300 is configured to release the internal pressure of the energy storage apparatus 1000 when the internal pressure of the energy storage apparatus 1000 is relatively high, thereby reducing the possibility of explosion of the energy storage apparatus 1000 due to excessive internal pressure.

For the convenience of description, a length direction of the lower plastic member 100 is defined as an X-axis direction, a width direction of the lower plastic member 100 is defined as a Y-axis direction, and a thickness direction of the lower plastic member 100 is defined as a Z-axis direction.

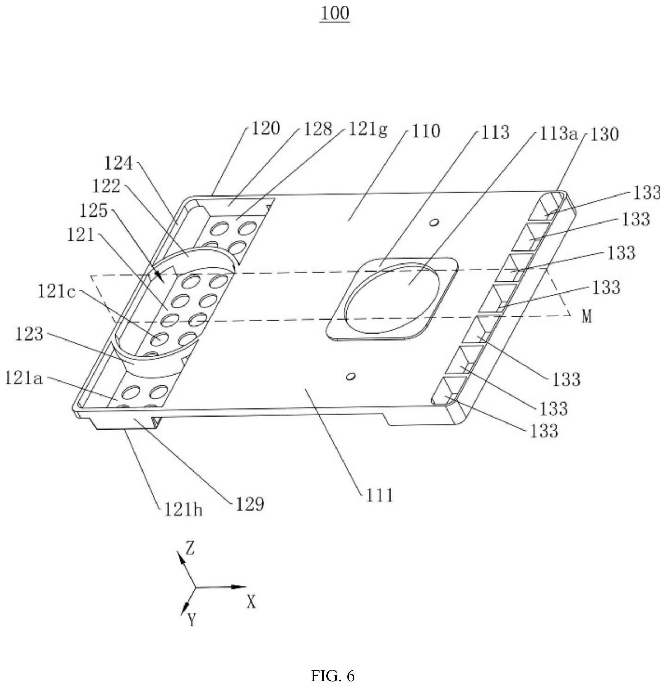

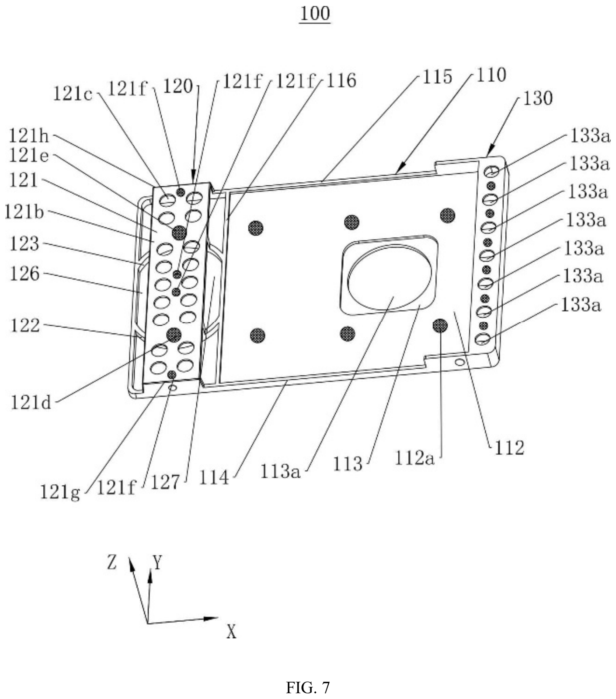

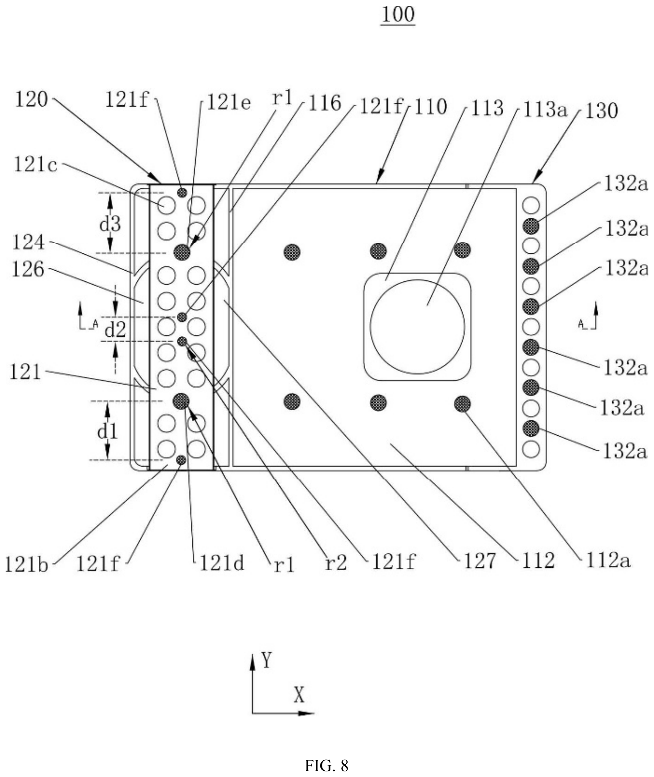

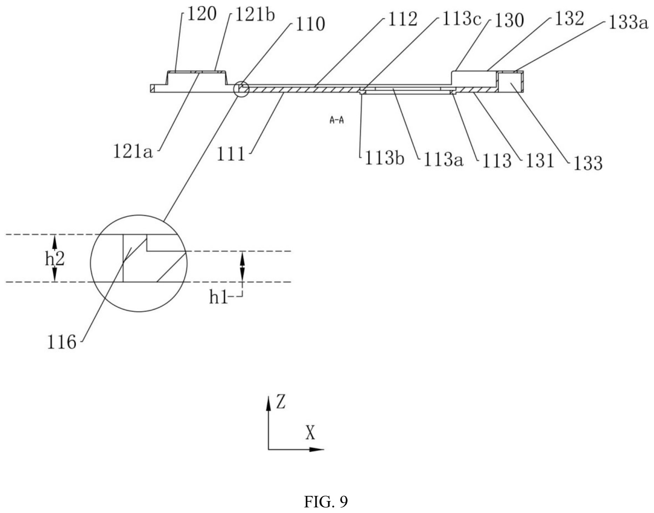

Reference can be made to FIG. 6 to FIG. 9. The present disclosure further discloses a lower plastic member 100. The lower plastic member 100 includes a body portion 110, a vent portion 120, and a recessed platform 130. A thickness direction of the body portion 110 is a first direction, and the first direction is the Z-axis direction. The vent portion 120, the body portion 110, and the recessed platform 130 are sequentially connected in a second direction. The second direction is the X-axis direction. The lower plastic member 100 is made of an insulating material and may be formed by an injection-molding process. It can be understood that the body portion 110, the vent portion 120, and the recessed platform 130 are all made of insulating materials.

The body portion 110 has a first surface 111 and a second surface 112 that are opposite to each other in the first direction. The body portion 110 is substantially plate-shaped.

The body portion 110 has a first side-plate 114 and a second side-plate 115 that are opposite to each other in a third direction. The third direction is the Y-axis direction. The body portion 110 also has a third side-plate 116 connected to the first connecting rib 122 and the second connecting rib 123. Two ends of the third side-plate 116 are respectively connected to the first side-plate 114 and the second side-plate 115. The first side-plate 114, the second side-plate 115, and the third side-plate 116 all extend the second surface 112 along the Z-axis. The first side-plate 114, the second side-plate 115, and the third side-plate 116 can improve the overall strength of the body portion 110, and the third side-plate 116 can also improve the connection strength between the body plate and each of the first connecting rib 122 and the second connecting rib 123.

The recessed platform 130, the first side-plate 114, the second side-plate 115, and the third side-plate 116 cooperatively define a mounting space. The components of the end-cover assembly 1200 that are connected to the lower plastic member 100 can be connected to the lower plastic member 100 in the mounting space, so that the structural compactness of the end-cover assembly 1200 can be improved. The recessed platform 130, the first side-plate 114, the second side-plate 115, and the third side-plate 116 can limit the components mounted in the mounting space, so that the structural strength of the end-cover assembly 1200 can be improved.

A distance between the first surface 111 and the second surface 112 in the first direction is *h1.* A dimension of the third side-plate 116 in the first direction is *h2.* 1/3 *≤ h1*/*h2 ≤* 2/3. The distance from the first surface 111 to the second surface 112 in the first direction is the thickness of the middle region of the body portion 110 that is surrounded by the recessed platform 130, the first side-plate 114, the second side-plate 115, and the third side-plate 116. It can be seen that the dimension of the third side-plate 116 in the first direction is greater than the dimension from the first surface 111 to the second surface 112 in the first direction, so that the connection area between the body portion 110 and each of the first connecting rib 122 and the second connecting rib 123 is larger, thereby improving the connection strength between the third side-plate 116 and each of the first connecting rib 122 and the second connecting rib 123. If the value of *h1*/*h2* is too small, when the distance between the first surface 111 and the second surface 112 is constant, the dimension of the third side-plate 116 in the first direction is too large, so that the dimension of the third side-plate 116 in the first direction is too large, resulting in excessive space occupied by the lower plastic member 100 and reduction of the energy density of the energy storage apparatus 1000. If the value of *h1*/*h2* is too large, when the distance between the first surface 111 and the second surface 112 is constant, the dimension of the third side-plate 116 in the first direction is too small, so that the effect of improving the connection strength between the third side-plate 116 and each of the first connecting rib 122 and the second connecting rib 123 is not significant.

The vent portion 120 includes a vent plate 121, a first connecting rib 122, a second connecting rib 123, and a connecting edge-plate 124. The connecting edge-plate 124 is spaced apart from the body portion 110 in the second direction. The vent plate 121 is positioned between the body portion 110 and the connecting edge-plate 124 in the second direction. The vent plate 121 has a third surface 121a and a fourth surface 121b that are opposite to each other in the first direction. The fourth surface 121b is positioned at one side of the second surface 112 positioned facing away from the first surface 111 in the first direction. The vent plate 121 defines a vent hole 121c extending through the third surface 121a and the fourth surface 121b. The first connecting rib 122 and the second connecting rib 123 are symmetrical about a symmetry plane M. The symmetry plane M is positioned in the middle of two opposite ends of the vent plate 121 in the third direction, and the third direction is the Y-axis direction. Two ends of the first connecting rib 122 are respectively connected to the body portion 110 and the connecting edge-plate 124. Two ends of the second connecting rib 123 are respectively connected to the body portion 110 and the connecting edge-plate 124. The first connecting rib 122 and the second connecting rib 123 are connected to the third surface 121a in the first direction. Positions where the first connecting rib 122 and the second connecting rib 123 are connected to the third surface 121a do not overlap the vent hole 121c. In the Z-axis direction, a horizontal plane where the first surface 111 is located is higher than a horizontal plane where the second surface 112 is located, a horizontal plane where the third surface 121a is located is higher than a horizontal plane where the fourth surface 121b is located, and the horizontal plane where the fourth surface 121b is located is lower than the horizontal plane where the second surface 112 is located. In a possible implementation, the horizontal plane where the third surface 121a is located is lower than the horizontal plane where the second surface 112 is located. It can be understood that there may be a height difference between the third surface 121a and the second surface 112.

The first connecting rib 122, the second connecting rib 123, the body portion 110, the connecting edge-plate 124, and the vent plate 121 cooperatively define a gas-collecting space 125 configured for gas collection for the explosion-proof valve 300. The gas-collecting space 125 enables gas to flow and gather below the explosion-proof valve. A region of the first connecting rib 122 between two ends of the first connecting rib 122 arches away from the second connecting rib 123. A region of the second connecting rib 123 between two ends of the second connecting rib 123 arches away from the first connecting rib 122. In the Z-axis direction, the cross-section of the first connecting rib 122 and the cross-section of the second connecting rib 123 each are substantially arc-shaped. On the one hand, the gas-collecting space 125 can be configured for gas collection for the explosion-proof valve 300. On the other hand, the gas-collecting space 125 can guide the gas, so that the gas in the energy storage apparatus 1000 can be discharged from the opened explosion-proof valve 300 to the outside of the energy storage apparatus 1000. Since the region of the first connecting rib 122 between the two ends of the first connecting rib 122 arches away from the second connecting rib 123, and the region of the second connecting rib 123 between the two ends of the second connecting rib 123 arches away from the first connecting rib 122, the gas-collecting space 125 can be enlarged, thereby facilitating the discharge of more gas in the energy storage apparatus 1000 from the opened explosion-proof valve 300 to the outside of the energy storage apparatus 1000.

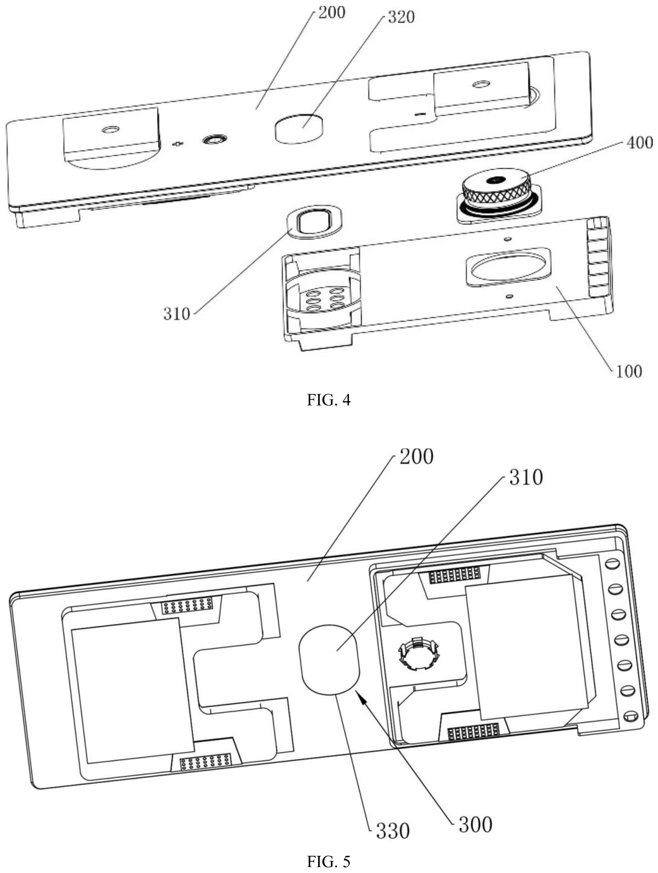

Reference can be made to FIG. 4 and FIG. 5. The explosion-proof valve 300 includes an explosion-proof sheet 310 and an explosion-proof hole 320 defined in the top cover. An outer periphery of the explosion-proof sheet 310 is welded to an inner wall of the explosion-proof hole 320 to form a weld-seam portion 330. A surface of the first connecting rib 122 positioned facing away from the vent plate 121 and a surface of the second connecting rib 123 positioned facing away from the vent plate 121 abut against the top cover 200. In the first direction, a projection of the weld-seam portion 330 is positioned within the gas-collecting space 125. The first connecting rib 122 and the second connecting rib 123 are arranged outside the explosion-proof sheet 310 of the explosion-proof valve, so that the explosion-proof valve opened by mistake caused by the impact of a wound electrode assembly on the lower plastic member when the battery accidentally falls can be avoided, thereby improving the safety performance of the battery.

The vent plate 121 is spaced apart from the body portion 110 to define a first vent opening 126. The vent plate 121 is spaced apart from the connecting edge-plate 124 to define a second vent opening 127. Both the first vent opening 126 and the second vent opening 127 are in communication with the gas-collecting space 125. In the embodiments provided in the present disclosure, the first vent opening 126 and the second vent opening 127 can be symmetrically defined, so that the ventilation volume of the first vent opening 126 can be substantially equal to the ventilation volume of the second vent opening 127. The first vent opening 126 and the second vent opening 127 can facilitate the entry of gas in the energy storage apparatus 1000 into the gas-collecting space 125 and then the discharge from the gas-collecting space 125 to the outside of the energy storage apparatus 1000. The first vent opening 126 and the second vent opening 127 are positioned at both sides of the vent plate 121 in the second direction. The negative pressure generated by the gas entering the gas-collecting space 125 through the first vent opening 126 can balance the negative pressure generated by the gas entering the gas-collecting space 125 through the second vent opening 127. Therefore, the force-bearing stability of the vent plate 121 can be improved, thereby further improving the structural stability of the lower plastic member 100.

The vent portion 120 further includes a first reinforcing rib 128 and a second reinforcing rib 129. Two ends of the first reinforcing rib 128 are respectively connected to the body portion 110 and the connecting edge-plate 124. The first reinforcing rib 128 is arcuately connected to a first end 121g of the vent plate 121. Two ends of the second reinforcing rib 129 are respectively connected to the body portion 110 and the connecting edge-plate 124. The second reinforcing rib 129 is arcuately connected to the second end 121h of the vent plate 121. The first connecting rib 122 and the second connecting rib 123 are positioned between the first reinforcing rib 128 and the second reinforcing rib 129. The first reinforcing rib 128 and the second reinforcing rib 129 can enhance the connection strength between the vent plate 121 and the body portion 110, and can also improve the structural strength of the vent portion 120, thereby further improving the overall strength of the lower plastic member 100.

A first push-point 121d is provided on the fourth surface 121b at a position of the fourth surface 121b that is positioned facing away from a connection between the third surface 121a and the first connecting rib 122. A second push-point 121e is provided on the fourth surface 121b at a position of the fourth surface 121b that is positioned facing away from a connection between the third surface 121a and the second connecting rib 123.

The vent portion 120 is configured to correspond to the explosion-proof valve 300 and can provide the gas-collecting space for the explosion-proof valve 300 when the explosion-proof valve is opened. The vent portion 120 can make the gas flow and collect below the explosion-proof valve. In order to enlarge the gas-collecting space for the explosion-proof valve 300, the fourth surface 121b is positioned at one side of the second surface 112 facing away from the first surface 111 in the first direction, so that if the thickness of the vent plate 121 is controlled to be constant, the vent portion 120 may have a larger space for the explosion-proof valve 300 to collect gas. Since the fourth surface 121b is positioned at the side of the second surface 112 facing away from the first surface 111 in the first direction, phenomena such as draft mark and deformation are more likely to occur when the vent plate 121 is demolded. The fourth surface 121b is provided with the first push-point 121d and the second push-point 121e, so that when the lower plastic member 100 is demolded, the first push-point 121d and the second push-point 121e are configured for contact with ejector pins of the mold respectively. When the ejector pins of the mold move, the ejector pins can eject the lower plastic member 100 to demold the lower plastic member 100. The first push-point 121d is disposed at the position of the fourth surface 121b that is positioned facing away from the connection between the third surface 121a and the first connecting rib 122. When the ejector pin is in contact with the first push-point 121d and pushes the lower plastic member 100 to demold, the first connecting rib 122 can improve the structural strength of the first push-point 121d. When the first push-point 121d is subjected to the thrust of the ejector pin, the first connecting rib 122 can reduce the recessed degree of the first push-point 121d, reduce the probability of draft mark, and improve the yield of the lower plastic member 100. The second push-point 121e is disposed at the position of the fourth surface 121b that is positioned facing away from the connection between the third surface 121a and the second connecting rib 123. When the ejector pin is in contact with the second push-point 121e and pushes the lower plastic member 100 to demold, the second connecting rib 123 can improve the structural strength of the second push-point 121e. When the second push-point 121e is subjected to the thrust of the ejector pin, the second connecting rib 123 can reduce the recessed degree of the second push-point 121e, reduce the probability of draft mark, and improve the yield of the lower plastic member 100. No through hole is defined in the region where the first connecting rib 122 and the second connecting rib 123 are connected to the vent plate 121, so that the connection strength between the vent plate 121 and each of the first connecting rib 122 and the second connecting rib 123 can be improved, thereby further improving the overall structural strength of the lower plastic member 100.

Multiple third push-points 121f are further provided on the fourth surface 121b. The radius of the first push-point 121d is greater than the diameter of the third push-point 121f. The radius of the second push-point 121e is greater than the radius of the third push-point 121f. The multiple third push-points 121f can be arranged in the Y-axis direction, and the multiple push-points are symmetrically arranged in the Y direction. The first push-point 121d, the second push-point 121e, and the third push-points 121f on the fourth surface 121b respectively abut against the ejector pins of the mold. When the ejector pins of the mold move, the first push-point 121d, the second push-point 121e, and the third push-points 121f are jointly stressed, so as to demold the vent plate 121 and improve the demolding yield of the vent plate 121. The first push-point 121d is disposed at the position of the fourth surface 121b that is positioned facing away from the connection between the third surface 121a and the first connecting rib 122. The second push-point 121e is disposed at the position of the fourth surface 121b that is positioned facing away from the connection between the third surface 121a and the second connecting rib 123. The positions where the first connecting rib 122 and the second connecting rib 123 are connected to the third surface 121a do not overlap the vent hole 121c. It can be seen that there is a large space at the position of the fourth surface 121b that is positioned facing away from the connection between the first connecting rib 122 and the third surface 121a to form the first push-point 121d with a larger radius, and there is a large space at the position of the fourth surface 121b that is positioned facing away from the connection between the second connecting rib 123 and the third surface 121a to form the second push-point 121e with a larger radius. Compared with the third push-point 121f, the radii of the first push-point 121d and the second push-point 121e are larger, so that the contact area between the ejector pin of the mold and each of the first push-point 121d and the second push-point 121e is larger, and the pressure between the ejector pin of the mold and each of the first push-point 121d and the second push-point 121e may be smaller. On the one hand, the probability of warping or deformation of the lower plastic member 100 due to excessive local forces on the vent plate 121 during demolding can be reduced. On the other hand, the lower plastic member 100 can be demolded in advance, so that there is no need to wait for the lower plastic member 100 to be completely cooled before performing the demolding, thereby improving the production efficiency of the lower plastic member 100.

In the embodiments provided in the present disclosure, the radius of the first push-point 121d and the radius of the second push-point 121e are both *r1.* The radius of the third push-point 121f is *r2.* 1/3 *≤ r2*/*r1* ≤ 2/3. When the lower plastic member 100 is demolded, the local forces on the vent plate 121 may be different. By providing the first push-point 121d and the second push-point 121e with different radii from the third push-point 121f, the probability of warping or deformation of the vent plate 121 due to excessive concentration of local forces can be reduced. The positions of the first push-point 121d, the second push-point 121e, and the third push-point 121f do not overlap the vent hole 121c. The existence and arrangement of the vent holes 121c may limit the radii of the first push-point 121d, the second push-point 121e, and the third push-point 121f. If the value of *r2*/*r1* is too small, with r2 being a fixed value, the arrangement position of the vent holes 121c may be significantly affected, thereby impairing the gas circulation ability of the vent plate 121. If the value of *r2*/*r1* is too large, with r2 being a fixed value, it is insufficient to balance the local forces on various parts of the vent plate 121 when the lower plastic member 100 is demolded.

The vent plate 121 includes a first end 121g and a second end 121h in the third direction. The multiple third push-points 121f are divided into a first group, a second group, and a third group. The second group has at least two third push-points 121f. A third push-point 121f in the first group is distributed between the first end 121g and the first push-point 121d. The third push-points 121f in the second group are distributed between the first push-point 121d and the second push-point 121e. A third push-point 121f in the third group is distributed between the second push-point 121e and the second end 121h. It can be seen that the third push-points 121f in the second group are located at centered positions the fourth surface 121b. By arranging the third push-points 121f in the second group more concentrated in the centered positions of the fourth surface 121b, the forces on various parts of the vent plate 121 can be balanced when the lower plastic member 100 is demolded.

A distance between one third push-point 121f in the first group adjacent to the first push-point 121d and the first push-point 121d is *d1.* A distance between two adjacent third push-points 121f in the second group is *d2.* A distance between one third push-point 121f in the third group adjacent to the second push-point 121e and the second push-point 121e is *d3. d2 < d1* and *d2 < d3.*

When the lower plastic member 100 is demolded, the region of the vent plate 121 between the first end 121g and the second end 121h of the vent plate 121 is prone to be subjected to relatively large stress. By arranging the third push-points 121f between the first push-point 121d and the second push-point 121e more densely, the forces on the vent plate 121 can be more uniformly distributed when the lower plastic member 100 is demolded, and the probability of draft mark and deformation of the vent plate 121 can be reduced, thereby improving the product yield.

*1*/*4 ≤ d2*/*d1* ≤ 3/4 and 1/4 *≤ d2*/*d3* ≤ 3/4. Since 1/4 *≤ d2*/*d1* ≤ 3/4 and 1/4 *≤ d2*/*d3 ≤* 3/4, the forces on the vent plate 121 can be more uniform when the lower plastic member 100 is demolded. If the ratio of d2/d1 is too small, both ends of the vent plate 121 are prone to warping when the lower plastic member 100 is demolded. If the ratio of d2/d1 is too large, the effect of more uniform force on the vent plate 121 cannot be achieved when the lower plastic member 100 is demolded, and the vent plate 121 is prone to the phenomenon of draft mark.

The body portion 110 further has a mounting boss 113. The mounting boss 113 has a fifth surface 113b and a sixth surface 113c that are opposite to each other in the first direction. The fifth surface 113b exceeds the first surface 111. The sixth surface 113c is positioned between the first surface 111 and the second surface 112 in the first direction. The mounting boss 113 further defines a mounting through-hole 113a extending through the fifth surface 113b and the sixth surface 113c.

The mounting boss 113 is configured for mounting of the terminal post 400. The terminal post 400 passes through the mounting through-hole 113a. The fifth surface 113b exceeds the first surface 111 and the sixth surface 113c is positioned between the first surface 111 and the second surface 112 in the first direction, so that a step is formed between the first surface 111 and the fifth surface 113b. Due to the step, the terminal post 400 may not directly act on the first surface 111, thereby reducing the possibility of deformation of the body portion 110 when the terminal post 400 is mounted in the mounting through-hole 113a. A step formed between the second surface 112 and the sixth surface 113c can limit the position of the terminal post 400 and improve the mounting stability of the terminal post 400.

The recessed platform 130 is connected to one end of the body portion 110 positioned away from the vent portion 120. The recessed platform 130 has a seventh surface 131 and an eighth surface 132 that are opposite to each other in the first direction. The eighth surface 132 exceeds the second surface 112.

The recessed platform 130 defines multiple grooves 133 on the seventh surface 131 in the third direction. A through hole 133a is defined on the bottom of each of the multiple grooves 133. The multiple grooves 133 defined on the recessed platform 130 can reduce the weight of the lower plastic member 100, reduce the material required for forming the recessed platform 130, and lower the cost. The multiple through holes 133a can be used for gas circulation.

Multiple fourth push-points 112a are provided on the second surface 112. The multiple fourth push-points 112a are symmetrical about the symmetry plane M. The multiple fourth push-points 112a are configured to abut against the ejector pins of the mold when the lower plastic member 100 is demolded. When the ejector pins of the mold move, the ejector pins push the fourth push-points 112a, so that the lower plastic member 100 can be demolded, thereby reducing the possibility of draft mark and deformation of the body portion 110, and improving the production yield of the lower plastic member 100.

Multiple fifth push-points 132a are provided on the eighth surface 132. The multiple fifth push-points 132a are symmetrical about the symmetry plane M. The multiple fifth push-points 132a are configured to abut against the ejector pins of the mold when the lower plastic member 100 is demolded. When the ejector pins of the mold move, the ejector pins push the fifth push-points 132a, so that the lower plastic member 100 can be demolded, thereby reducing the possibility of draft mark and deformation of the recessed platform 130, and improving the production yield of the lower plastic member 100.

The lower plastic member 100 is symmetric about the symmetry plane M. The symmetry plane M is perpendicular to the third direction. Therefore, the overall uniformity of the lower plastic member 100 can be improved, the overall structural strength of the lower plastic member 100 can be enhanced, and the production yield of the lower plastic member 100 can be increased. It can be seen that the first push-point 121d and the second push-point 121e are symmetrically arranged, the multiple third push-points 121f are symmetrically arranged, the multiple fourth push-points 112a are symmetrically arranged, and the multiple fifth push-points 132a are symmetrically arranged, so that when the lower plastic member 100 is demolded, the overall force acting on the lower plastic member 100 can be more uniform, thereby reducing the possibility of draft mark and deformation of the lower plastic member 100.

It may be noted that all directional indications (such as up, down, left, right, front, back...) in the embodiments of the present disclosure are only used to explain the relative positional relationship and movement conditions between various components in a certain specific posture (as illustrated in the accompanying drawings). If this specific posture changes, the directional indications also change accordingly.

In addition, in the present disclosure, descriptions such as "first" and "second" are only for descriptive purposes and cannot be understood as indicating or implying their relative importance or implicitly indicating the number of the indicated technical features. Therefore, features defined with "first" and "second" may explicitly or implicitly include at least one such feature. In the description of the present disclosure, "multiple" means at least two, such as two, three, etc., unless otherwise clearly and specifically defined.

In the present disclosure, unless otherwise clearly specified and limited, terms such as "connect", "connected to", "fix" and the like may be understood in a broad sense. For example, it may be fixed connection or detachable connection or integral connection; mechanical connection or electrical connection; direct connection or indirect connection through an intermediate; or internal communication of two components or an interaction relationship between two components, unless otherwise clearly limited. For those of ordinary skill in the art, the specific meaning of the above terms in the present disclosure can be understood according to specific circumstances.

Moreover, the technical solutions between the various embodiments of the present disclosure can be combined with each other, but it must be based on what can be realized by those of ordinary skill in the art. When the combination of technical solutions is contradictory or cannot be realized, it should be considered that such a combination of technical solutions does not exist and is not within the scope of protection claimed in the present disclosure.

The above descriptions are only the specific implementations of the present disclosure, but the protection scope of the present disclosure is not limited to the above. Any skilled in the technical field can easily think of changes or replacements within the technical scope of the present disclosure, and the changes or replacements should be covered in the protection scope of the present disclosure. Therefore, the protection scope of the present disclosure shall be subject to the protection scope of the claims.

## Claims

1. A lower plastic member, comprising:
a body portion, having a first surface and a second surface that are opposite to each other in a first direction; and
a vent portion, comprising a vent plate, a first connecting rib, a second connecting rib, and a connecting edge-plate, wherein the connecting edge-plate is spaced apart from the body portion in a second direction, the vent plate is positioned between the body portion and the connecting edge-plate in the second direction, the vent plate has a third surface and a fourth surface that are opposite to each other in the first direction, and the fourth surface is positioned at one side of the second surface positioned facing away from the first surface in the first direction; the vent plate defines a vent hole extending through the third surface and the fourth surface; the first connecting rib has two ends respectively connected to the body portion and the connecting edge-plate; the second connecting rib has two ends respectively connected to the body portion and the connecting edge-plate; the first connecting rib and the second connecting rib are connected to the third surface in the first direction; positions where the first connecting rib and the second connecting rib are connected to the third surface do not overlap the vent hole; and the first connecting rib and the second connecting rib are symmetrical about a symmetry plane, and the symmetry plane is positioned in the middle of two opposite ends of the vent plate in a third direction;
wherein a first push-point is provided on the fourth surface at a position of the fourth surface that is positioned facing away from a connection between the third surface and the first connecting rib; and a second push-point is provided on the fourth surface at a position of the fourth surface that is positioned facing away from a connection between the third surface and the second connecting rib.

2. The lower plastic member of claim 1, wherein a plurality of third push-points are provided on the fourth surface, a radius of the first push-point is greater than a diameter of each of the plurality of third push-points, and a radius of the second push-point is greater than a radius of each of the plurality of third push-points.

3. The lower plastic member of claim 2, wherein the radius of the first push-point and the radius of the second push-point are both *r1,* and the radius of each of the plurality of third push-points is *r2,* wherein 1/3 *≤ r2*/*r1 ≤* 2/3.

4. The lower plastic member of claim 2, wherein the vent plate has a first end and a second end in the third direction, the plurality of third push-points are divided into a first group, a second group, and a third group, the second group has at least two of the plurality of third push-points, a third push-points in the first group is distributed between the first end and the first push-point, the third push-points in the second group are distributed between the first push-point and the second push-point, and a third push-points in the third group is distributed between the second push-point and the second end; and
a distance between one third push-point in the first group adjacent to the first push-point and the first push-point is *d1,* a distance between two adjacent third push-points in the second group is *d2,* and a distance between one third push-point in the third group adjacent to the second push-point and the second push-point is *d3*, wherein *d2 < d1* and *d2 < d3.*

5. The lower plastic member of claim 4, wherein 1/4 *< d2*/*d1* ≤ 3/4 and 1/4 *≤ d2*/*d3* ≤ 3/4.

6. The lower plastic member of any one of claims 1 to 5, wherein the first connecting rib, the second connecting rib, the body portion, the connecting edge-plate, and the vent plate cooperatively define a gas-collecting space configured for gas collection for an explosion-proof valve, a region of the first connecting rib between the two ends of the first connecting rib arches away from the second connecting rib, and a region of the second connecting rib between the two ends of the second connecting rib arches away from the first connecting rib; and
the explosion-proof valve comprises an explosion-proof sheet and an explosion-proof hole defined in a top cover, an outer periphery of the explosion-proof sheet is welded to an inner wall of the explosion-proof hole to form a weld-seam portion, a surface of the first connecting rib positioned facing away from the vent plate and a surface of the second connecting rib positioned facing away from the vent plate are configured to abut against the top cover, and in the first direction, a projection of the weld-seam portion is configured to be positioned within the gas-collecting space.

7. The lower plastic member of claim 6, wherein the vent plate is spaced apart from the body portion to define a first vent opening, the vent plate is spaced apart from the connecting edge-plate to define a second vent opening, and both the first vent opening and the second vent opening are in communication with the gas-collecting space.

8. The lower plastic member of claim 6, wherein the vent portion further comprises a first reinforcing rib and a second reinforcing rib, the first reinforcing rib has two ends respectively connected to the body portion and the connecting edge-plate, and the first reinforcing rib is arcuately connected to the first end of the vent plate; the second reinforcing rib has two ends respectively connected to the body portion and the connecting edge-plate, and the second reinforcing rib is arcuately connected to the second end of the vent plate; and the first connecting rib and the second connecting rib are positioned between the first reinforcing rib and the second reinforcing rib.

9. The lower plastic member of any one of claims 1 to 8, wherein the body portion further has a mounting boss, the mounting boss has a fifth surface and a sixth surface that are opposite to each other in the first direction, the fifth surface exceeds the first surface, and the sixth surface is positioned between the first surface and the second surface in the first direction; and the mounting boss further defines a mounting through-hole extending through the fifth surface and the sixth surface.

10. The lower plastic member of any one of claims 1 to 9, wherein the body portion has a first side-plate and a second side-plate opposite to each other in the third direction, the body portion further has a third side-plate connected to the first connecting rib and the second connecting rib, and the first side-plate, the second side-plate, and the third side-plate all exceed the second surface.

11. The lower plastic member of claim 10, wherein a distance between the first surface and the second surface in the first direction is *h1,* and a dimension of the third side-plate in the first direction is *h2,* wherein 1/3 *≤ h1*/*h2 ≤* 2/3.

12. The lower plastic member of any one of claims 1 to 10, further comprising a recessed platform, wherein the recessed platform is connected to one end of the body portion positioned away from the vent portion, the recessed platform has a seventh surface and an eighth surface that are opposite to each other in the first direction, and the eighth surface exceeds the second surface.

13. The lower plastic member of claim 12, wherein the recessed platform defines a plurality of grooves on the seventh surface in the third direction, and each of the plurality of grooves defines a through hole on a bottom of each of the plurality of grooves.

14. The lower plastic member of any one of claims 1 to 13, wherein a plurality of fourth push-points are provided on the second surface, and the plurality of fourth push-points are symmetrical about the symmetry plane.

15. The lower plastic member of claim 12, wherein a plurality of fifth push-points are provided on the eighth surface, and the plurality of fifth push-points are symmetrical about the symmetry plane.

16. The lower plastic member of any one of claims 1 to 15, wherein the lower plastic member is symmetrical about the symmetry plane.

17. An end-cover assembly, comprising:
the lower plastic member of any one of claims 1 to 16;
a top cover, covering the lower plastic member; and
an explosion-proof valve, mounted on the top cover and positioned at a position corresponding to the vent portion.

18. An energy storage apparatus, comprising an electrode assembly, a connector, and the end-cover assembly of claim 17, wherein the connector is connected to the electrode assembly and the end-cover assembly.

19. An energy storage system, comprising a conversion apparatus, a load, and the energy storage apparatus of claim 18, wherein the conversion apparatus is configured to convert energy to output electrical energy, the conversion apparatus is electrically connected to the energy storage apparatus, and the energy storage apparatus is electrically connected to the load.
